(19) Europäisches Patentamt / European Patent Office / Office européen des brevets

(11) **EP 2 499 773 B1**

(12) **FASCICULE DE BREVET EUROPEEN**

(45) Date de publication et mention de la délivrance du brevet:
**17.02.2016 Bulletin 2016/07**

(21) Numéro de dépôt: **10773354.5**

(22) Date de dépôt: **08.11.2010**

(51) Int Cl.:
*H04L 9/00* (2006.01)          *H04L 9/06* (2006.01)
*H04L 9/28* (2006.01)

(86) Numéro de dépôt international:
**PCT/EP2010/067064**

(87) Numéro de publication internationale:
**WO 2011/057991 (19.05.2011 Gazette 2011/20)**

(54) **CIRCUIT ELECTRONIQUE DE FAIBLE COMPLEXITE PROTEGE PAR MASQUAGE PERSONNALISE**

ELEKTRONISCHE SCHALTUNG MIT NIEDRIGER KOMPLEXITÄT UND SCHUTZ DURCH MASSGESCHNEIDERTE MASKIERUNG

LOW-COMPLEXITY ELECTRONIC CIRCUIT PROTECTED BY CUSTOMIZED MASKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2009 FR 0958030**

(43) Date de publication de la demande:
**19.09.2012 Bulletin 2012/38**

(73) Titulaire: **Institut Telecom - Telecom Paristech 75013 Paris (FR)**

(72) Inventeurs:
• **GUILLEY, Sylvain**
  **F-75013 Paris (FR)**
• **DANGER, Jean-Luc**
  **F-92160 Antony (FR)**

(74) Mandataire: **Brunelli, Gérald**
  **Marks & Clerk France**
  **Immeuble Visium**
  **22, avenue Aristide Briand**
  **94117 Arcueil Cedex (FR)**

(56) Documents cités:
**EP-A1- 1 722 502          EP-A2- 0 981 223**
**WO-A1-2009/074728          US-A1- 2005 232 430**

• **Hung-Yu Chien: "Tree-Based Matched RFID Yoking Making It More Practical and Efficient", I.J.Computer Network and Information Security, vol. 1 octobre 2009 (2009-10), pages 1-8, XP002588445, Extrait de l'Internet: URL:http://www.mecs-press.org/ijcnis/ijcnis-200901001.pdf [extrait le 2010-06-23]**

**Description**

L'invention concerne un circuit électronique protégé par masquage et tirant parti d'une personnalisation propre au circuit de façon à réduire la portée des attaques par observation et réduire le coût d'implémentation de la protection. L'invention s'applique notamment au domaine de la protection des circuits qui manipulent des données confidentielles dont les circuits de cryptographie sont un exemple.

L'activité des circuits électroniques est observable pendant leur fonctionnement au travers des grandeurs physiques telles que la consommation de puissance, le temps de calcul ou le rayonnement électromagnétique.

Ces quantités physiques dépendent à la fois des architectures de calcul et des données manipulées à l'intérieur du circuit. Des informations sur les données traitées sont donc indirectement disponibles à l'extérieur du circuit par l'observation des dites quantités appelées canaux cachés ou canaux auxiliaires.

La dissipation de ces quantités physiques peut remettre en cause la sécurité de systèmes traitant des données secrètes protégées notamment par des méthodes de cryptographie. Ainsi, si des données secrètes sont protégées en utilisant un algorithme de cryptographie symétrique, la robustesse de la protection réside dans la capacité à garder la clé de chiffrement secrète. La dissipation des quantités physiques peut permettre à un tiers d'obtenir ladite clé en mettant en oeuvre des attaques adaptées et, par conséquent, d'accéder aux données secrètes. Une attaque par observation de quantités physiques dissipées par ledit circuit est habituellement qualifiée simplement d'attaque par observation. Dans la suite de la description, un tiers utilisant des méthodes d'attaque par observation pour accéder à des données ne lui étant pas destinées est appelé attaquant, les quantités physiques dissipées, quant à elles, sont appelées fuites ou canaux cachés.

Il existe aujourd'hui des attaques par observation puissantes permettant d'accéder aux données traitées par des circuits protégés.

Ainsi des attaques par observation de fuites représentatives des temps de traitement des données par le circuit existent, comme celle présenté dans l'article de P. C. Kocher, J. Jaffe et B. Jun intitulé Timing Attack on Implémentations of Diffie-Hellman, RSA, DSS and Other Systems, Proceedings of CRYPTO'96, volume 1109 LNCS, pages 104-113, Springer-Verlag, 1996.

Des attaques par observation de la consommation des circuits peuvent également être utilisées par un attaquant, en utilisant par exemple des méthodes de type DPA, ce type d'attaques étant décrit dans l'article de P. C. Kocher, J. Jaffe et B. Jun intitulé Differential Power Analysis, Proceedings of CRYPTO'99, volume 1666 LNCS, pages 388-397, Springer-Verlag, 1999.

Ces méthodes permettent de contourner la sécurité conférée au niveau mathématique par la cryptographie.

S'il est relativement simple d'équilibrer un algorithme en temps de temps de traitement, il est plus difficile de protéger les circuits contre l'observation instantanée de la forme d'onde de la consommation électrique.

Il existe différentes méthodes de contre-mesure pour protéger un circuit électronique contre les attaques sur les canaux cachés. Leurs caractéristiques sont notamment spécifiées par des critères communs définis au niveau international ou par des normes, comme par exemple la norme américaine FIPS 140, l'acronyme FIPS venant de l'expression anglo-saxonne « Federal Information Processing Standardization».

Certaines contre-mesures ne font qu'accroître le nombre de mesures nécessaires pour qu'une attaque réussisse. C'est le cas, par exemple, des méthodes de contre-mesures utilisant un générateur de bruit non-fonctionnel mis en oeuvre à côté de la logique de calcul. Par exemple, un générateur de nombre pseudo aléatoire PRNG, acronyme venant de l'expression anglo-saxonne « Pseudo-Random Number Generator », initialisé aléatoirement, peut jouer ce rôle. Dans ce cas, toute mesure recueillie par un attaquant est perturbée par un bruit qui se superpose au canal caché. Les attaques deviennent plus complexes car il faut, en pratique, réaliser plus de mesures afin d'amplifier le rapport signal-sur-bruit attendu pour que la technique de contre-mesure soit efficace.

D'autres techniques de contre-mesures protègent contre les attaques par observation par masquage des canaux cachés et font habituellement intervenir au cours du traitement à protéger une variable aléatoire ou pseudo-aléatoire m appelée masque. Ladite variable est utilisée de manière à ce que le résultat du calcul ne dépend pas dudit masque, mais que les fuites d'information au travers des canaux cachés en dépendent.

Ainsi, les techniques de contre-mesure par masquage sont mises en oeuvre en entrelaçant les données sensibles x transitant au sein du circuit de cryptographie avec la variable de masque m, cet entrelacement servant à entraver l'exploitation du canal caché par un attaquant. Les données ou variables sensibles x correspondent à des variables étant à la fois prédictibles entièrement et partageants une information mutuelle non nulle avec le secret. Cette technique revient à modifier la représentation des données sensibles x, vers la quantité $x \oplus m$ correspondant au chiffrement Vernam de x en appliquant la clé m à l'aide de l'opération $\oplus$ désignant une opération de type OU exclusif également désigné par le sigle XOR dans la suite de la description.

Le masque peut être conditionné par une signature propre à chaque circuit auquel cas il est montré que la fuite de la clé est chiffrée par ledit masque. Cette spécificité évite des attaques dites par « catalogage » où des clones de circuits peuvent être exploités pour modéliser les fuites.

Les techniques de contre-mesures habituelles faisant appel à un masquage aléatoire résistent aux attaques directes sur la prédiction des registres attaques du premier ordre, comme par exemple aux attaques de type DPA ou aux attaques de type CPA, acronyme venant de l'expression anglo-saxonne « Correlation Power Analysis ». Elles sont mises en oeuvre, par exemple, en dupliquant les chemins de traitement de données dans le circuit.

Cette duplication implique une augmentation significative de la complexité du circuit par rapport à une implémentation non masquée.

Par ailleurs, ces contre-mesures résistent mal à des attaques d'ordre supérieur ou égal à deux. A titre d'exemple, les attaques de deuxième ordre exploitent le fait que la variance de la fuite dépend de la variable sensible x. L'estimation de la variance est réalisée soit par combinaison des fuites d'information aux deux dates où $x \oplus m$ et m d'autre part sont utilisés, soit par estimation de la distribution conjointe du couple $(x \oplus m, m)$ lorsque le masque et la donnée masquée sont utilisés simultanément. Les attaques de second ordre basées sur l'estimation de la variance sont appelées attaques « zero-offset » et sont décrites dans l'article de E. Peeters, F. Standaert, N. Donckers et J-J. Quisquater intitulé Improved Higher Order Side-Channel Attacks with FPGA experiments, Josyula R. Rao and Berk Sunar editors, Cryptographic Hardware and Embedded Systems - Proceedings of CHES, volume 3659 LNCS, pages 309-323. Springer-Verlag, 2005.

Le document de Demande de Brevet Européen EP 0 981 223 A2, publié le 23.02.2000, expose un circuit de cryptographie protégé des attaques sur les canaux cachés au moyen d'une commutation aléatoire de masques appliquées à une boîte de substitution (S-Box).

Le document "Tree-Based matched RFID Yoking MAking It More Practical and Efficient" par Hung-Yu Chien, publié en octobre 2009 dans "I.J.Computer Network and Information Security", vol. 1, pages 1-8, expose l'assignation d'une clé propre à chacun parmi un ensemble de dispositifs.

Un but de l'invention est notamment de pallier les inconvénients précités.

A cet effet l'invention a pour objet un circuit de cryptographie protégé par masquage, ledit circuit comportant des moyens pour chiffrer des mots binaires à l'aide d'au moins une clé $k_r{}^c$, des moyens pour appliquer des traitements linéaires et des traitements non linéaires auxdits mots, des moyens pour masquer lesdits mots. Les mots binaires sont démasqués en amont des traitements non linéaires en utilisant un masque $k_r{}^i$ et masqués en aval desdits traitements en utilisant un masque $k_{r+1}{}^i$, les masques $k_r{}^i$ et $k_{r+1}{}^i$ faisant partie d'un ensemble de masques propres à chaque instance du circuit.

Selon un aspect de l'invention, les traitements non linéaires, le démasquage en amont des traitements non linéaires et le masquage en aval des traitements linéaires sont implémentés dans une mémoire de type ROM.

Les masques $k_r{}^i$ sont, par exemple, des masques secondaires déduits de masques primaires $k^i$ tels que $k_{r+1}{}^i = P(k_r{}^i)$ et $k0^i = k^i$, la fonction $P(x)$ correspondant à une fonction de permutation des éléments de x, les mémoires ROM restant inchangées.

Dans un mode de réalisation, la fonction $P(x)$ est une permutation circulaire, un masque secondaire d'indice r+1 étant déduit d'un masque secondaire d'indice r en permutant circulairement le masque $k_r{}^i$ d'un nombre de bits d choisi.

Dans un autre mode de réalisation, les masques principaux $k^i$ sont de longueur W et composés d'un nombre entier de sous-masques de longueur S, les masques secondaires $k_r{}^i$ étant générés par permutation desdits sous-masques.

Les sous-masques des masques secondaires sont, par exemple, choisis en utilisant l'expression :

$$k_{r+1}^{i}[x] = k_r^{i}[\mathrm{mod}(x - Q, W/S)]$$

dans laquelle :

r est le numéro de ronde ;
i est un nombre de 4 bits tirés aléatoirement ;
Q est un entier permettant de contrôler le taux de permutation entre deux masques secondaires $k_r{}^i$ et $k_{r+1}{}^i$ consécutifs ;
S est la longueur d'un sous-masque exprimée en bits ;
W est la longueur du masque principal exprimée en bits ;
mod() est une fonction définie telle que mod(a,b) = a modulo b, a et b étant des nombres entiers ;

Selon un aspect de l'invention, le masque principal $k^i$ de chiffrement est modifié régulièrement en choisissant aléatoirement un masque $k^i$ parmi un ensemble de masques principaux mémorisés dans le circuit.

Selon un autre aspect de l'invention, l'ensemble des masques principaux mémorisés dans le circuit est différent d'un circuit à l'autre.

L'ensemble des masques principaux sont obtenus à l'aide d'un circuit de génération de masques intrinsèques au composant.

Dans un mode de mise en oeuvre, la distance de Hamming entre deux masques $k_r^i$ et $k_{r+1}^i$ est sensiblement égale à S/2.

Le poids de Hamming d'un masque $k^i$ est, par exemple, sensiblement égal à W/2.

Selon un aspect de l'invention, les traitements non linéaires sont mis en oeuvre à l'aide de S-boxes.

Les traitements non linéaires sont appliqués, par exemple, après les traitements linéaires dans un même bloc combinatoire juste avant l'échantillonnage du résultat dans un registre.

Le circuit est, par exemple, implémenté dans un FPGA.

L'ensemble des masques principaux est obtenu, par exemple, à l'aide de la modification du fichier de configuration du circuit FPGA.

Le circuit comprend, par exemple, des moyens de reconfiguration dynamique permettant de mettre à jour l'ensemble des masques principaux et les tables implémentant les parties du circuit correspondant aux traitements non-linéaires.

Dans un mode de mise en oeuvre, le circuit est implémenté dans un ASIC.

L'invention a notamment comme avantage de ne pas augmenter significativement la complexité du circuit de par la mise en oeuvre de la protection par masquage, notamment concernant les parties du circuit réalisant des traitements non linéaires. L'invention a également comme avantage de permettre l'utilisation d'un jeu de masque prédéterminé de taille réduite, ledit jeu pouvant être différent d'un circuit à l'autre de manière à rendre la protection unique entre circuits issus de la même chaîne de production.

D'autres caractéristiques et avantages de l'invention apparaîtront à l'aide de la description qui suit donnée à titre illustratif et non limitatif, faite en regard des dessins annexés parmi lesquels :

- la figure 1 présente l'exemple d'une fonction de Feistel protégée par masquage ;
- la figure 2 donne un exemple de circuit de cryptographie protégé par masquage, les parties non linéaires étant démasquées ;
- la figure 3 illustre une implémentation de l'algorithme AES protégé par masquage selon l'invention.

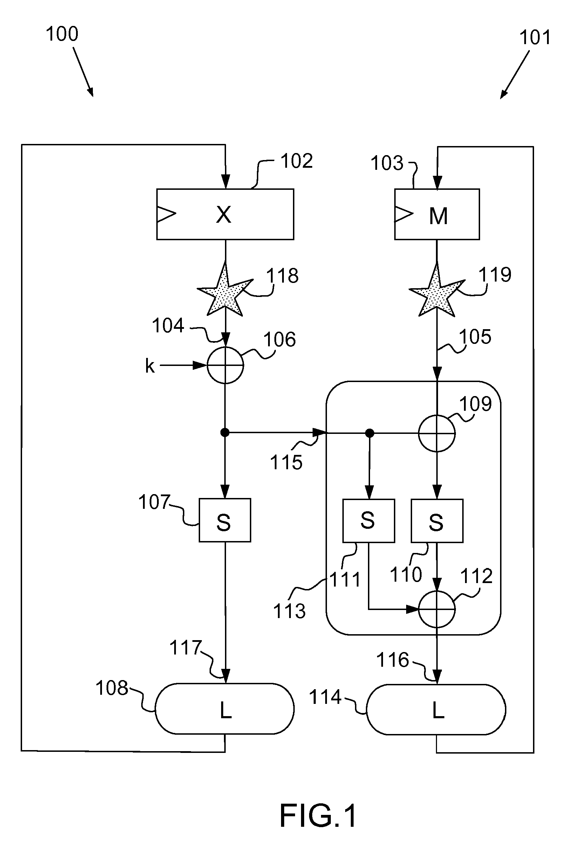

La figure 1 présente l'exemple d'une fonction de Feistel protégée par masquage.

Le principe du masquage, connu de l'homme du métier, consiste à modifier la représentation des variables sensibles x en une représentation redondante. Cette représentation comprend au moins deux parts, une part correspondant aux données sensibles masquées notée $x \oplus m$ et une part correspondant au masque m. La somme de ces deux parts dans le corps de Galois binaire où elles sont définies permet de retrouver la variable x en utilisant la propriété suivante :

$$x = (x \oplus m) \oplus m \tag{1}$$

A titre d'exemple, dans un algorithme de chiffrement par bloc tel que DES ou AES, le résultat de l'opération de cryptage d'un bloc de données est issu de la répétition de plusieurs rondes. Une ronde est aussi appelée « round » en anglais et désigne un cycle de calcul dans lequel au moins deux types de transformations ont été exécutées, l'une linéaire et l'autre non-linéaire, appelée également transformation par substitution.

La transformation linéaire a pour objectif de mélanger les symboles ou les groupes de symboles présentés à son entrée en suivant des règles prédéfinies et créer ainsi de la diffusion.

La transformation par substitution est réalisée habituellement à l'aide de tables de substitution dites S-boxes et contribue à casser la linéarité de la structure de chiffrement. En utilisant ce type de transformation, des symboles ou des groupes de symboles sont remplacés par d'autres symboles ou groupes de symboles dans le but de créer de la confusion.

Ainsi, le couple de parts $(x \oplus m, m)$ est transformé en un couple $(\text{round}(x \oplus m'), m')$, la fonction round() désignant l'opération fonctionnelle d'une ronde, tandis que m' est le nouveau masque de ronde.

Les parties linéaires de chaque ronde sont simplement dupliquées. La linéarité des fonctions L() desdites parties implique que :

$$L(x \oplus m) = L(x) \oplus L(m) \tag{2}$$

La linéarité permet ainsi d'utiliser le masque $m_L = L(m)$ comme nouveau masque après transformation.

En revanche, la mise en oeuvre du masquage sur les parties non-linéaires, c'est-à-dire les S-Boxes, induit un accroissement significatif en terme de coût d'implémentation. Un masque $m_{NL}$ prenant en compte cette transformation et permettant de retrouver S(x) à partir de S(x ⊕ m) doit être déterminé tel que :

$$S(x) = S(x \oplus m) \oplus m_{NL} \qquad (3)$$

Pour cela, $m_{NL}$ peut s'exprimer à l'aide d'une fonction S'() définie telle que :

$$m_{NL} = S'(x, x \oplus m) = S(x) \oplus S(x \oplus m) \qquad (4)$$

La fonction S'() possède donc deux fois plus d'entrées que la fonction S(). Ainsi, la mise en oeuvre du masquage pour des fonctions S() non linéaires revient à ajouter le carré de la complexité de S.

Afin d'illustrer la mise en oeuvre du masquage dans un circuit de cryptographie, la figure 1 présente l'exemple d'une fonction de Feistel protégée par masquage. Ce type de fonction est notamment utilisé pour le chiffrement par bloc de type DES, acronyme venant de l'expression anglo-saxonne « Data Encryption Bloc ».

La mise en oeuvre du masquage des données sensibles x requiert, comme explicité précédemment, un traitement en deux parties 100, 101.

La première partie 100 correspond aux traitements réalisés sur la part x ⊕ m et la seconde partie 101 correspond aux traitements réalisés sur la part m.

Le chiffrement des données sensibles est effectué en appliquant une clé k au bloc à chiffrer suivie d'une S-Box de fonction S() et de l'application d'une fonction linéaire L().

Les signaux numériques à traiter par les deux voies 100, 101 du circuit sont synchronisés en utilisant un registre 102, 103 pour chaque voie.

La première voie 100 traite la part comportant les données sensibles x masquées, c'est-à-dire x ⊕ m. La clé k de chiffrement est appliquée en utilisant une porte XOR 106. Le signal résultant correspond à x ⊕ m ⊕ k. Une S-Box 107 permet ensuite d'obtenir le signal S(x ⊕ m ⊕ k) 117 auquel est appliquée une fonction linéaire L 108.

La seconde voie 101 traite la part correspondant au masque m. Comme explicité précédemment, l'application d'une fonction non-linéaire S() 107 sur un signal masqué implique habituellement sa prise en compte au niveau du traitement de la seconde part. Ainsi, la fonction S'() définie par l'expression (4) est mise en oeuvre 113 en utilisant deux S-Boxes et 2 portes XOR 109, 112. La fonction prend en entrée d'une part le masque m 105 et d'autre part le signal x ⊕ m ⊕ k 115 résultant de l'application de la clé de chiffrement k au niveau de la première voie 100. Sur le signal 116 résultant de l'application de S'() est appliqué une fonction linéaire L() 114 de manière à prendre en compte la fonction linéaire 108 de la première voie 100. La fonction S'() peut être implémentée dans un mémoire de type ROM de manière à ce qu'elle soit protégée contre les attaques par observations. Il est en effet particulièrement difficile d'observer, par exemple, les variations de consommation électrique au sein d'une telle mémoire.

Même si une telle implémentation est protégée par masquage et que l'observation de l'activité liée à la fonction S'() est difficile à observer, des failles de sécurité la rende fragile, notamment contre des attaques du second ordre. Il est par exemple possible pour une attaquant de positionner deux sondes d'observation de la consommation électrique au niveau de deux noeuds de circuit distincts, par exemple aux sorties 118, 119 des deux registres d'entrée de chaque voie. Une attaque basée sur l'estimation de la variance, c'est-à-dire de type « zero-offset », est dans ce cas très efficace.

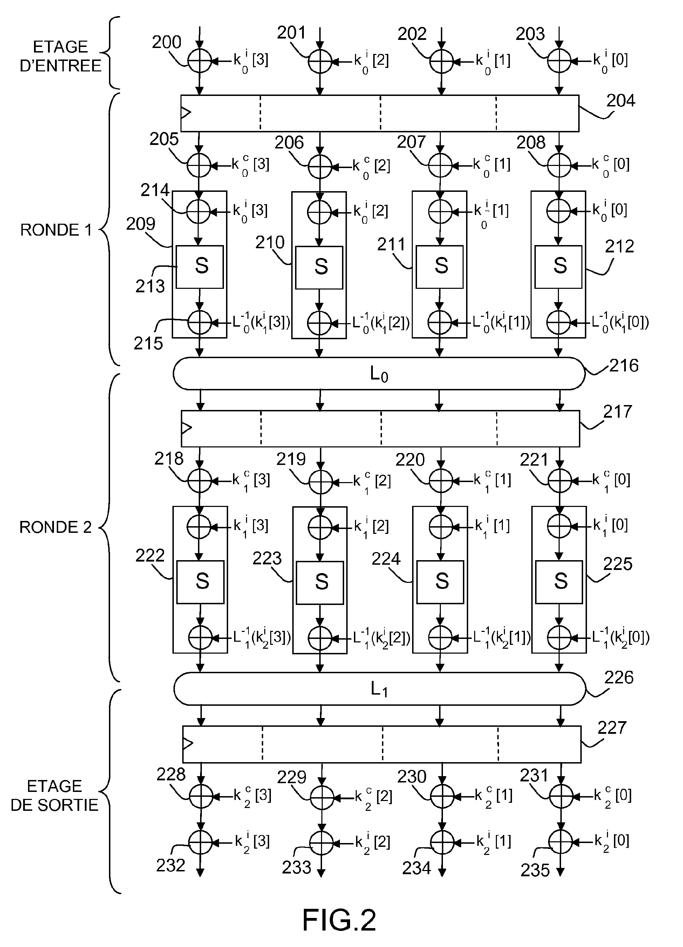

La figure 2 donne un exemple de circuit de cryptographie protégé par masquage sur laquelle s'appuie l'invention. Il faut noter qu'il n'existe plus de chemin de masque ce qui, avantageusement, rend impossible les attaques du second ordre comme celle décrite précédemment.

Comme explicité précédemment, lorsque les parties non masquées d'un circuit de chiffrement sont confinées dans une mémoire, il est difficile d'attaquer les variables internes à ladite mémoire. En d'autres termes, une mémoire est considérée comme une boîte noire protégée contre les fuites d'informations. Seules les entrées ou les sorties sont vulnérables. Un des objectifs du circuit décrit est de tirer partie d'une l'implémentation en mémoire avec une méthode de masquage personnalisée de complexité modérée.

Par ailleurs, lorsque l'utilisation de mémoires n'est pas adaptée, les éléments de calcul peuvent être ordonnancés de manière à positionner les parties non-linéaires le plus loin possible de la sortie des registres. A titre d'exemple, une attaque en corrélation est d'autant moins efficace qu'elle est menée profondément dans la logique combinatoire du circuit.

L'exemple de la figure 2 présente un exemple de mise en oeuvre de l'invention dans un circuit basé sur l'utilisation d'un réseau SPN, acronyme venant de l'expression anglo-saxonne « Substitution Permutation Network ». Ce type de circuit est aussi appelé réseau S-P de Shannon. Dans cet exemple un cryptage en deux rondes est considéré. Des mots binaires d'indice r notés $k_r^i$ et $k_r^c$ sont utilisés respectivement en tant que clé de masquage et clé de chiffrement.

Le circuit présenté en exemple peut être décomposé en plusieurs étages, soit un étage d'entrée, un étage correspondant à la première ronde, un étage correspondant à la seconde ronde et un étage de sortie. Les données à chiffrer sont présentées en entrée de l'étage d'entrée, par exemple sous la forme de mots de 32 bits découpés en quatre sous-mots de 8 bits. Une masquage d'entrée est appliqué en utilisant la clé k0$^i$ d'une longueur de 32 bits, ladite clé étant découpée en quatre sous-masques de 8 bits $k_0^i[0]$, $k_0^i[1]$, $k_0^i[2]$, $k_0^i[3]$, lesdits sous-masques étant appliqués au quatre sous-mots de 8bits en utilisant quatre portes XOR 200, 201, 202, 203.

En entrée de la première ronde, un registre 204 prend en entrée les quatre sous-mots de 8 bits résultant du masquage par la clé $k_0^i$. Ce registre permet de synchroniser les différents flux binaires, un flux correspondant à un sous-mot de 8 bits d'entrée. Une première clé de chiffrement $k_0^c$, découpée en quatre sous-clés de 8 bits notées $k_0^c[0]$, $k_0^c[1]$, $k_0^c[2]$, $k_0^c[3]$, est appliquée au niveau de quatre portes XOR 206, 206, 207, 208 sur les sous-mots masqués présentés en sortie dudit registre 204. La clé $k_0^c$ est associée à la première ronde de chiffrement. Les quatre sous-mots de données masqués par $k_0^i$ et chiffrés par $k_0^c$ sont ensuite respectivement traités par quatre blocs de traitements 209, 210, 211, 212 implémentés dans une mémoire, par exemple de type ROM. Il est à noter que la complexité d'implémentation de fonctions, notamment non linéaires, dans une mémoire ROM augmente de manière exponentielle avec le nombre d'entrées. Les algorithmes cryptographiques intègrent cette contrainte et traitent les mots à chiffrer en sous-mots de plus petite taille au niveau de la fonction non-linéaire afin de minimiser la complexité d'implémentation.

En entrée de chaque bloc de traitement, les sous-mots de 8 bits sont démasqués en appliquant les quatre sous-masques de 8 bits $k_0^i[0]$, $k_0^i[1]$, $k_0^i[2]$, $k_0^i[3]$ à l'aide de portes XOR 214. Une fonction non linéaire est ensuite appliquée, une S-box 213 pouvant être utilisée pour la mettre en oeuvre.

En amont de la sortie de chaque bloc de traitement, une porte XOR 215 est utilisée afin de masquer les données en sortie, de manière à ce que les données sensibles soient masquées en sortie de l'étage de première ronde par un masque $k_1^i$ découpé en quatre sous-masques $k_1^i[0]$, $k_1^i[1]$, $k_1^i[2]$, $k_1^i[3]$. Une transformation linéaire $L_0()$ est appliquée en sortie de ronde, celle-ci devant être prise en compte pour le masquage au sein des blocs de traitement. Pour cela, le masquage est réalisé en utilisant un masque modifié $L_0^{-1}(k_1^i)$ du masque $k_1^i$. Celle-ci est découpée en quatre sous-masques modifiés de 8 bits $L_0^{-1}(k_1^i[0])$, $L_0^{-1}(k_1^i[1])$, $L_0^{-1}(k_1^i[2])$, $L_0^{-1}(k_1^i[3])$, la transformation $L_0^{-1}()$ correspondant à l'inverse de la transformation linéaire $L_0()$ 216.

En sortie des blocs de traitement 209, 210, 211, 212, la transformation $L_0()$ est appliquée sur les mots binaires présentés en sortie desdits blocs. Le résultat de la première ronde de chiffrement correspond aux sous-mots binaires en sortie de la transformation linéaire 216, lesdits sous-mots correspondant à des données sensibles masquées par le masque $k_1^i$ et donc protégés contre des attaques par observations.

L'entrée de la deuxième ronde est la sortie de la première ronde et correspond aux quatre sous-mots de 8 bits résultant de la transformation linéaire 216 de la première ronde. Ces quatre sous-mots sont présentés en entrée d'un registre 217 permettant de synchroniser les différents flux binaires.

Une seconde clé de chiffrement $k_1^c$ propre à la deuxième ronde, découpée en quatre sous-clés de 8 bits notées $k_1^c[0]$, $k_1^c[1]$, $k_1^c[2]$, $k_1^c[3]$, est appliquée au niveau de quatre portes XOR 218, 219, 220, 221 sur les sous-mots masqués présentés en sortie du registre 217.

Les quatre sous-mots de données masqués par $k_1^i$ et chiffrés par $k_1^c$ sont ensuite respectivement traités par quatre blocs de traitements 222, 223, 224, 225 implémentés dans une mémoire, par exemple, de type ROM. En entrée de chaque bloc, les données sont démasquées en appliquant la clé $k_1^i$ à l'aide de portes XOR.

Une fonction non linéaire est ensuite appliquée, une S-box pouvant être utilisée dans chaque bloc pour la mettre en oeuvre. En sortie de chaque bloc de traitement, un porte XOR est utilisé pour masquer les données en sortie, de manière à ce que les données sensibles soient masquées en sortie de l'étage de seconde ronde par le masque $k_2^i$. Pour cela, le masquage est réalisé en utilisant un masque modifié $L_1^{-1}(k_2^i)$, la transformation $L_i^{-1}()$ correspondant à l'inverse d'une transformation linéaire $L_1()$ 226.

La transformation $L_1()$ est appliquée sur les sous-mots binaires présentés en sortie des blocs de traitement 209, 210, 211, 212. Le résultat de la seconde ronde de chiffrement correspond aux sous-mots binaires en sortie de la transformation linéaire 226, lesdits sous-mots correspondant à des données sensibles masquées et donc protégés contre des attaques par observation.

Un avantage de ce type d'implémentation est qu'il est possible, d'intervertir le chiffrement par $k_0^c$ et le masquage par $k_0^i$ pour la ronde 1 ainsi que le chiffrement par $k_1^c$ et le masquage par $k_1^i$ pour la ronde 2.

De façon à réduire la complexité d'implémentation et à utiliser toujours les mêmes mémoires ROM, il est proposé de déduire les masques d'implémentation utilisés d'une étape à l'autre par une permutation d'un masque principal. Par exemple, si $k^i$ est le masque principal, les masques secondaires $k_0^i$, $k_1^i$ et $k_2^i$ peuvent être déduits du masque principal de la manière suivante :

$$k_0^i = k^i$$

$$k_1^i = P(k_0^i)$$

$$k_2^i = P(k_1^i)$$

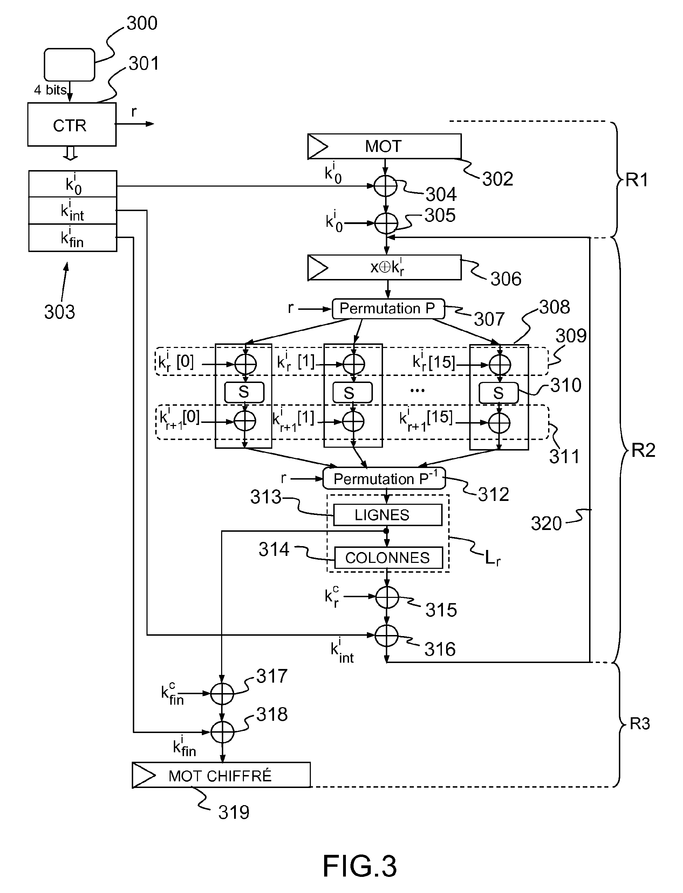

la fonction P(bin) représentant une fonction de permutation, par exemple une permutation circulaire du mot binaire bin. De plus, le masque principal $k^i$ peut être tiré au hasard parmi un ensemble prédéfini de masques principaux. Un exemple de permutation de masques sur la base d'un masque principal est donné dans la description à l'aide de la figure 3.

La faible taille de l'ensemble des masques principaux permet avantageusement d'utiliser des masques personnalisés propres au composant, c'est-à-dire propre à chaque instance du circuit. L'application de cette signature permet de réduire la portée des attaques de type « catalogage » car les fuites deviennent ainsi propres à un circuit et non plus à un type de circuit. Les attaques d'ordre élevé HO-DPA, acronyme venant de l'expression anglo-saxonne « higher-order differential power analysis », comme par exemple celles de type « zero-offset » sont quant à elles remises en cause du fait qu'il n'y a plus de chemin de masque spécifique. Il n'est donc plus possible de considérer le couple (variable masquée, masque).

La figure 3 illustre une implémentation de l'algorithme AES protégé par masquage.

L'algorithme de chiffrement par blocs AES, acronyme venant de l'expression anglo-saxonne « Advanced Encryption Standard », est particulièrement performant pour garder secret des messages binaires. Le message à protéger est traité par mots binaires de taille fixe, lesdits mots pouvant être de 128, 192 ou 256 bits. Les clés de chiffrement sont de longueur W, W étant égal à la longueur des mots à traiter. L'algorithme comprend trois phases de traitement, chaque phase étant composée d'une ou plusieurs rondes. La première phase R1 correspond à une ronde d'initialisation, la deuxième phase R2 correspond à N rondes utilisant la même structure de manière itérative et la troisième phase R3 correspond à une ronde finale. Le principe de ces trois phases propre à l'algorithme AES est connu de l'homme du métier.

Le circuit est par exemple un circuit FPGA ou ASIC.

Une protection par masquage selon l'invention peut être introduite de manière à protéger contre les attaques par observation des canaux cachés le circuit de cryptographie AES mettant en oeuvre les trois phases R1, R2, R3.

Un générateur de nombre aléatoire 300 est utilisé afin de générer des mots binaires i, par exemple de n bits, n représentant l'entropie du masquage. Dans l'exemple décrit dans la suite de la description, n est représenté sur 4 bits.

Un compteur CTR 301 incrémente une variable r correspondant au numéro de ronde en cours.

Le circuit protégé comprend une zone de mémoire 303 permettant notamment de stocker un ensemble de masques constants de longueur égale à celle des mots à chiffrer, soit 128 bits dans cet exemple.

Le nombre i généré aléatoirement 300 permet de sélectionner un masque principal $k^i$ parmi l'ensemble des masques mémorisés 303. Par conséquent, pour n = 4, 16 masques principaux $k^i$ différents peuvent être sélectionnés aléatoirement.

Par ailleurs, les masques principaux mémorisés dans le composant peuvent être différents d'un composant produit à l'autre, de manière à obtenir une protection différenciée et éviter les « attaques par catalogage ».

Un masque principal $k^i$ de longueur W est composé d'un nombre entier de sous-masques de longueur S, W étant un multiple de S. Par exemple, un masque $k^i$ de longueur W = 128 bits comprend par exemple 16 sous-masques de S = 8 bits, lesdits sous-masques étant notés $k_0^i[0]$, $k_0^i[1]$, ..., $k_0^i[15]$.

A partir d'un masque principal, des masques secondaires peuvent être générés, par exemple en permutant les sous-masques composant le masque principal. Ainsi, à partir d'un unique masque principal, un masque secondaire différent peut être utilisé pour chaque ronde.

De façon à augmenter la robustesse face aux attaques, il existe un jeu de masques principaux $k^i$ différent d'un composant à l'autre de manière à mettre en oeuvre une protection masquage différenciée entre lesdits composants. La variable i est aléatoire et peut être générée avant chaque chiffrement.

Une fois le masque principal $k^i$ choisi, un masque secondaire d'indice r+1 est déduit d'un masque secondaire d'indice r en permutant avec une permutation P circulairement le masque $k_r^i$ d'un nombre de bits d choisi, le masque d'indice 0 étant initialisé tel que $k_0^i = k^i$.

d peut être choisi tel que d = S bits par exemple, c'est-à-dire d'une longueur correspondant à un sous masque.

Il est également possible de faire permuter le masque d'indice r d'un nombre entier de sous-masques. Ainsi, le masque $k_{r+1}^i$ peut être généré en utilisant l'expression :

$$k_{r+1}^i[x] = k_r^i[\mathrm{mod}(x - Q, W/S)] \qquad (5)$$

dans laquelle :

r est le numéro de ronde ;

i est un nombre de 4 bits tirés aléatoirement par le générateur 300 ;

Q est un entier permettant de contrôler le taux de permutation entre deux masques secondaires $k_r^i$ et $k_{r+1}^i$ consécutifs ;

S est la longueur d'un sous-masque exprimée en bits ;

W est la longueur du masque $k^i$ exprimée en bits ;

mod() est une fonction définie telle que mod(a,b) = a modulo b, a et b étant des nombres entiers ;

Le masque principal peut être, par exemple, modifié au cours d'une procédure de chiffrement en tirant au hasard une nouvelle valeur de i.

Avantageusement, la résistance aux attaques par observation peut être optimisée en choisissant les masques principaux $k^i$ tels que les masques secondaires soient indépendants les uns par rapport aux autres, par exemple en garantissant que la distance de Hamming entre $k_r^i$ et $k_{r+1}^i$ soit sensiblement égale à S/2.

Un équilibrage en moyenne des masques permet aussi de renforcer la protection, ledit équilibrage étant obtenu en garantissant que le poids de Hamming d'un masque secondaire et donc du masque principal soit sensiblement égal à W/2.

Dans l'exemple de la figure, les mots à chiffrer sont des mots de 128 bits et sont présentés en entrée du codeur dans une base de registre 302. Le mot à traiter est ensuite masqué par application de la clé $k_0^i = k^i$ non permutée à l'aide d'une porte XOR 304. Le résultat du masquage est ensuite chiffré par application d'une clé de chiffrement de longueur W notée $k_0^c$ à l'aide d'un seconde porte XOR 305.

Le mot masqué par $k_0^i$ et chiffré par $k_0^c$ est stocké dans un registre 306, ledit registre correspondant à l'entrée de la partie du circuit réalisant la deuxième phase de traitement R2, ladite phase correspondant à une boucle de chiffrement itératif, une itération correspondant à une ronde de traitement. Le mot mémorisé dans le registre 306 est traité par un module de contrôle 307 découpant le mot de 128 bits en 16 sous-mots de 8 bits. Le module de contrôle a également pour rôle de sélectionner le masque $k_r^i$ à utiliser pour démasquer les données en début de ronde, une ronde étant appliquée à chaque itération d'indice r. Les 16 sous-mots de 8 bits sont traités à l'aide de modules de fonction non-linéaire 308, lesdits modules étant implémentés dans une mémoire de type ROM, par exemple. Ces modules démasquent 309 les sous-mots présentés à leur entrée, leur applique un traitement non-linéaire 310 par exemple en utilisant des S-boxes, et masquent 311 le résultat dudit traitement. Il y a un module 308 de fonction non linéaire par sous-mot de 8 bits à traiter. Par conséquent, il y a 16 modules de fonctions non linéaires pour l'exemple de la figure 3.

Ces modules utilisent pour la ronde d'indice r les sous-masques $k_r^i[0]$, $k_r^i[1]$, ..., $k_r^i[15]$ pour le démasquage d'entrée 309 et les sous-masques $k_{r+1}^i[0]$, $k_{r+1}^i[1]$, ..., $k_{r+1}^i[15]$ pour le masquage de sortie 311. Par exemple, les 16 S-boxes peuvent être pré-calculées afin d'être masquées par les sous-masques $k_r^i[]$ puis démasquées par les sous-masques $k_{r+1}^i[]$.

Les 16 sous-mots en sortie des modules de traitements non linéaires sont ensuite dirigés vers un second module de contrôle 312 dont la fonction est notamment de concaténer lesdits mots en un mot de 128 bits.

Le mot de 128 bits est ensuite traité par deux modules de traitement linéaire, un premier réalisant un mélange des lignes 313 désigné habituellement par l'expression anglo-saxonne « Shift Rows » et un second traitement réalisant un mélange des colonnes 314, traitement habituellement désigné par l'expression anglo-saxonne « Shift Columns ». Ces deux traitements linéaires peuvent être modélisés par une fonction $L_r()$.

Un chiffrement utilisant une clé $k_r^c$ est appliqué sur le mot de 128 bits résultant desdits traitements linéaires, et ce à l'aide d'une fonction XOR 315.

Sur le mot résultant du chiffrement par $k_r^c$ et de façon à pouvoir utiliser les mêmes S-boxes d'une ronde à l'autre, un masque $ki_{int}^i$ de 128 bits est appliqué 316. Les masques $k_{int}^i$ sont mémorisés 303 après avoir été pré-calculés en utilisant l'expression :

$$k_{int}^i = k_{r+1}^i \oplus L_r^{-1}\left(k_r^i\right) \qquad (6)$$

Il existe ainsi en mémoire 16 mots pré-calculés $k_{int}^i$ de 128 bits.

Les traitements de la phase R2 sont exécutés N fois de manière itérative. Lorsque les N rondes de la deuxième phase R2 ont été exécutées, la phase finale R3 est exécutée sur le mot de 128 bits extrait entre le traitement linéaire de mélange des lignes 313 et le traitement linéaire de mélange de colonnes 314.

Après un chiffrement final utilisant une clé $k_{fin}^c$ appliquée par une fonction XOR 317 sur le mot extrait, un démasquage final est réalisé en appliquant un masque $k_{fin}^i$ de 128 bits à l'aide d'une fonction XOR 318.

Les 16 masques $k_{fin}^i$ de 128 bits sont mémorisés 303 dans le circuit protégé après avoir été pré-calculés en utilisant l'expression :

$$k_{fin}^i = k_R^i \oplus L_r'^{-1}\left(k_r^i\right) \qquad\qquad (7)$$

dans laquelle la fonction $L'_r{}^{-1}()$ représente l'inverse du traitement de mélange des lignes 313.

Le mot obtenu à la fin de la ronde finale, c'est-à-dire à la fin de la phase R3 de traitement correspond au résultat final du chiffrement AES. Le message chiffré obtenu est écrit dans un registre de sortie 319.

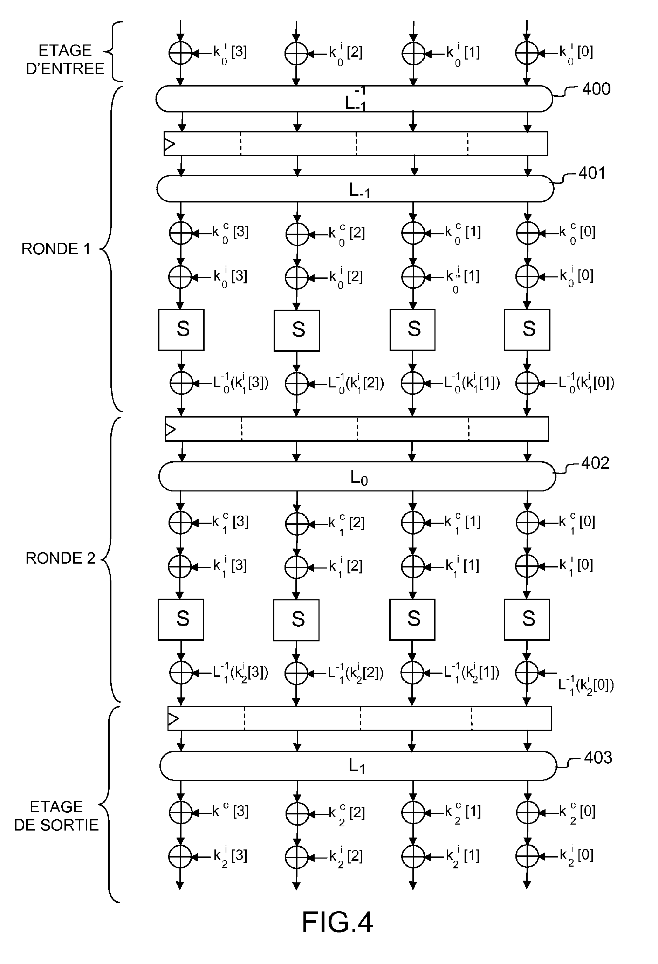

La figure 4 donne un exemple de circuit de cryptographie protégé par masquage dont les traitements non-linéaires sont positionnés en fin de ronde.

Lorsque les parties du circuit correspondant aux traitements non-linéaires sont implémentés en portes logiques et non en mémoire, les fonctions de démasquage en amont et de masquage en aval desdits traitements peuvent faire l'objet d'attaques.

Afin de protéger le circuit contre ces attaques, une solution est de placer les traitements non-linéaires d'une ronde en bout du cône de logique, c'est à dire juste avant l'échantillonnage par registre du résultat. Les calculs sont alors étalés du fait de leur dispersion temporelle et l'efficacité de l'attaque est alors limitée.

L'exemple de la figure 4 donne un exemple de circuit de cryptographie protégé par masquage mettant en oeuvre ce principe.

Cet exemple de circuit ressemble à celui présenté à l'aide de la figure 2. Le chiffrement est réalisé à l'aide d'une architecture de Feistel et est réalisé grâce à la mise en oeuvre d'un étage d'entrée, de deux étages de ronde appelés ronde 1 et ronde 2, puis d'un étage de sortie.

A la différence du circuit donné en exemple avec la figure 2, les traitements non-linéaires, mis en oeuvre par exemple avec des S-boxes, sont placés en bout de cône de logique. Les traitements linéaires sont donc placés en début de ronde. Ainsi, au niveau de l'étage correspondant à la première ronde, un traitement linéaire correspondant à une fonction de diffusion initiale $L_{-1}()$ est appliqué 401. Au niveau de l'étage correspondant à la deuxième ronde, un traitement linéaire correspondant à une fonction de diffusion $L_0()$ est appliqué 402.

L'inverse $L_{-1}^{-1}()$ de la fonction de diffusion initiale est appliqué 400 en sortie de l'étage d'entrée et une fonction de diffusion finale $L_1()$ est appliquée 403 à l'entrée de l'étage de sortie.

La consommation électrique en début de ronde est modélisable difficilement, alors qu'elle est rendue plus dépendante des conditions environnementales en fin de ronde.

## Revendications

1. Circuit de cryptographie protégé par masquage, ledit circuit comportant des moyens pour chiffrer des mots binaires à l'aide d'au moins une clé $k_r^c$, des moyens pour appliquer des traitements linéaires (216) et des traitements non linéaires (226) auxdits mots, des moyens pour masquer lesdits mots, où les mots binaires sont démasqués (214) en amont des traitements non linéaires en utilisant un masque $k_r^i$ et masqués (215) en aval des traitements non linéaires en utilisant un masque $k_{r+1}^i$, ledit circuit étant **caractérisé en ce que** les masques $k_r^i$ et $k_{r+1}^i$ font partie d'un ensemble de masques propres à chaque instance du circuit, les masques $k_r^i$ étant des masques secondaires déduits de masques primaires $k^i$ tels que $k_{r+1}^i = P(k_r^i)$ et $k_0^i = k^i$, la fonction $P(x)$ correspondant à une fonction de permutation des éléments de x.

2. Circuit selon la revendication 1 **caractérisé en ce que** les traitements non linéaires, le démasquage (214) en amont des traitements non linéaires et le masquage (215) en aval des traitements linéaires sont implémentés dans des mémoires de type ROM (209).

3. Circuit selon l'une des revendications précédentes **caractérisé en ce que** la fonction $P(x)$ est une permutation circulaire, un masque secondaire d'indice r+1 étant déduit d'un masque secondaire d'indice r en permutant circu-lairement le masque $k_r^i$ d'un nombre de bits d choisi.

4. Circuit selon l'une des revendications précédentes caractérisé en ce les masques principaux $k^i$ sont de longueur W et composés d'un nombre entier de sous-masques de longueur S, les masques secondaires $k_r^i$ étant générés par permutation desdits sous-masques.

5. Circuit selon la revendication 4 **caractérisé en ce que** les sous-masques des masques secondaires sont choisis en utilisant l'expression :

$$k_{r+1}^{l}[x] = k_{r}^{l}[\mathrm{mod}(x - Q, W/S)]$$

dans laquelle:

r est le numéro de ronde ;
i est un nombre de 4 bits tirés aléatoirement ;
Q est un entier permettant de contrôler le taux de permutation entre deux masques secondaires $k_{r}^{i}$ et $k_{r+1}^{i}$ consécutifs ;
S est la longueur d'un sous-masque exprimée en bits ;
W est la longueur du masque principal exprimée en bits ;
mod() est une fonction définie telle que mod(a,b) = a modulo b, a et b étant des nombres entiers ;

6. Circuit selon l'un quelconque des revendications précédentes **caractérisé en ce que** le masque principal $k^{i}$ de chiffrement est modifié régulièrement en choisissant aléatoirement un masque $k^{i}$ parmi un ensemble de masques principaux mémorisés dans le circuit.

7. Circuit selon la revendication 6 **caractérisé en ce que** l'ensemble des masques principaux mémorisés dans le circuit (303) est différent d'un circuit à l'autre.

8. Circuit selon la revendication 7 **caractérisé en ce que** l'ensemble des masques principaux est obtenu à l'aide d'un circuit interne de génération de masques.

9. Circuit selon l'un quelconque des revendications précédentes **caractérisé en ce que** la distance de Hamming entre deux masques $k_{r}^{i}$ et $k_{r+1}^{i}$ est égale à S/2.

10. Circuit selon l'une quelconque des revendications précédentes **caractérisé en ce que** le poids de Hamming d'un masque $k^{i}$ est égal à W/2.

11. Circuit selon l'une quelconque des revendications précédentes **caractérisé en ce que** les traitements non linéaires sont mis en oeuvre à l'aide de S-boxes (213, 310).

12. Circuit selon l'une quelconque des revendications précédentes **caractérisé en ce que** les traitements non linéaires sont appliqués après les traitements linéaires dans un même bloc combinatoire juste avant l'échantillonnage du résultat dans une registre.

13. Circuit selon l'une quelconque des revendications précédentes **caractérisé en ce qu'**il est implémenté dans un FPGA.

14. Circuit selon la revendication 13 **caractérisé en ce que** l'ensemble des masques principaux est obtenu à l'aide de la modification du fichier de configuration du circuit FPGA.

15. Circuit selon l'une quelconque des revendication 13 ou 14 **caractérisé en ce qu'**il comprend des moyens de reconfiguration dynamique permettant de mettre à jour l'ensemble des masques principaux et les tables implémentant les parties du circuit correspondant aux traitements non-linéaires

16. Circuit selon l'une quelconque des revendications 1 à 12 **caractérisé en ce qu'**il est implémenté dans un ASIC.

**Patentansprüche**

1. Kryptografieschaltung, die durch Maskierung geschützt ist, wobei die Schaltung Folgendes umfasst: Mittel zum Verschlüsseln von binären Wörtern mittels wenigstens eines Schlüssels $k_{r}^{c}$, Mittel zum Anwenden von linearen Verarbeitungen (216) und nichtlinearen Verarbeitungen (226) auf die Wörter, Mittel zum Maskieren der Wörter, wobei die binären Wörter oberhalb der nichtlinearen Verarbeitungen mit einer Maske $k_{r}^{i}$ demaskiert (214) sind und unterhalb der nichtlinearen Verarbeitungen mit einer Maske $k_{r+1}^{i}$ maskiert (215) sind, wobei die Schaltung **dadurch gekennzeichnet ist, dass** die Masken $k_{r}^{i}$ und $k_{r+1}^{i}$ Teil eines Satzes von Masken bilden, die für jede Instanz der Schaltung spezifisch sind, wobei die Masken $k_r{}^i$ sekundäre Masken sind, die von primären Masken $k^i$ abgeleitet sind, so dass $k_{r+1}{}^i = P(k_r{}^i)$ und $k0^i = k^i$ ist, wobei die Funktion P(x) einer Funktion zum Permutieren von Elementen von x entspricht.

2. Schaltung nach Anspruch 1, **dadurch gekennzeichnet, dass** die nichtlinearen Verarbeitungen, das Demaskieren (214) oberhalb der nichtlinearen Verarbeitungen und das Maskieren (215) unterhalb der linearen Verarbeitungen in Speichern (209) des ROM-Typs implementiert werden.

3. Schaltung nach einem der vorherigen Ansprüche, **dadurch gekennzeichnet, dass** die Funktion P(x) eine kreisförmige Permutation ist, wobei eine sekundäre Maske mit Index r+1 von einer sekundären Maske mit Index r durch kreisförmiges Permutieren der Maske $k_r{}^i$ durch eine gewählte Anzahl von Bits d abgeleitet ist.

4. Schaltung nach einem der vorherigen Ansprüche, **dadurch gekennzeichnet, dass** die Hauptmasken $k^i$ die Länge W haben und aus einer ganzen Zahl von Teilmasken der Länge S bestehen, wobei die sekundären Masken $k_r{}^i$ durch Permutieren der Teilmasken erzeugt werden.

5. Schaltung nach Anspruch 4, **dadurch gekennzeichnet, dass** die Teilmasken der sekundären Masken mit dem folgenden Ausdruck ausgewählt werden:

$$k_{r+1}^{I}[x] = k_r^{I}[\mathrm{mod}(x - Q, W/S)]$$

wobei:

    r die Kreisnummer ist;
    i eine Anzahl von 4 zufällig gezogenen Bits ist;
    Q eine ganze Zahl ist, die die Permutationsrate zwischen zwei aufeinander folgenden zu steuernden sekundären Masken $k_r{}^i$ und $k_{r+i}{}^i$ zulässt;
    S die Länge einer Teilmaske ist, ausgedrückt in Bits;
    W die Länge der Hauptmaske ist, ausgedrückt in Bits;
    mod() eine Funktion ist, die so definiert ist, dass mod(a,b) = a modulo b ist, wobei a und b ganze Zahlen sind.

6. Schaltung nach einem der vorherigen Ansprüche, **dadurch gekennzeichnet, dass** die Hauptverschlüsselungsmaske $k^i$ regelmäßig durch zufälliges Auswählen einer Maske $k^i$ aus einem Satz von in der Schaltung gespeicherten Hauptmasken modifiziert wird.

7. Schaltung nach Anspruch 6, **dadurch gekennzeichnet, dass** der in der Schaltung (303) gespeicherte Satz von Hauptmasken sich von einer Schaltung zur nächsten unterscheidet.

8. Schaltung nach Anspruch 7, **dadurch gekennzeichnet, dass** der Satz von Hauptmasken mit einer internen Schaltung zum Erzeugen von Masken erhalten wird.

9. Schaltung nach einem der vorherigen Ansprüche, **dadurch gekennzeichnet, dass** die Hamming-Distanz zwischen zwei Masken $k_r{}^i$ und $k_{r+1}{}^i$ gleich S/2 ist.

10. Schaltung nach einem der vorherigen Ansprüche, **dadurch gekennzeichnet, dass** die Hamming-Gewichtung einer Maske $k^i$ gleich W/2 ist.

11. Schaltung nach einem der vorherigen Ansprüche, **dadurch gekennzeichnet, dass** die nichtlinearen Verarbeitungen mit S-Boxen (213, 310) implementiert werden.

12. Schaltung nach einem der vorherigen Ansprüche, **dadurch gekennzeichnet, dass** die nichtlinearen Verarbeitungen nach den linearen Verarbeitungen im selben Kommunikationsblock unmittelbar vor dem Abtasten des Ergebnisses in einem Register angewandt werden.

13. Schaltung nach einem der vorherigen Ansprüche, **dadurch gekennzeichnet, dass** sie in einer FPGA-Schaltung implementiert wird.

14. Schaltung nach Anspruch 13, **dadurch gekennzeichnet, dass** der Satz von Hauptmasken mit Hilfe der Modifikation der Konfigurationsdatei der FPGA-Schaltung erhalten wird.

15. Schaltung nach einem der Ansprüche 13 bis 14, **dadurch gekennzeichnet, dass** sie dynamische Umkonfigurierungsmittel zum Aktualisieren des Satzes von Hauptmasken umfasst und die Tabellen die Teile der Schaltung implementieren, die den nichtlinearen Verarbeitungen entsprechen.

16. Schaltung nach einem der Ansprüche 1 bis 12, **dadurch gekennzeichnet, dass** sie in einer ASIC implementiert ist.


**Claims**

1. A cryptography circuit protected by masking, said circuit comprising means for encrypting binary words using at least one key $k_r^c$, means for applying linear processing operations (216) and non-linear processing operations (226) to said words, means for masking said words, where the binary words are unmasked (214) upstream of the non-linear processing operations using a mask $k_r^i$ and are masked (215) downstream of the non-linear processing operations using a mask $k_{r+1}^i$, said circuit being **characterised in that** the masks $k_r^i$ and $k_{r+1}^i$ form part of a set of masks specific to each instance of the circuit, the masks $k_r^i$ being secondary masks deduced from primary masks $k^i$ such that $k_{r+1}^i = P(k_r^i)$ and $k_0^i = k^i$, with the function P(x) corresponding to a function for permutating elements of x.

2. The circuit according to claim 1, **characterised in that** the non-linear processing operations, the unmasking (214) upstream of the non-linear processing operations and the masking (215) downstream of the linear processing operations are implemented in memories (209) of the ROM type.

3. The circuit according to any one of the preceding claims, **characterised in that** the function P(x) is a circular permutation, with a secondary mask having an index of r+1 being deduced from a secondary mask having an index r by circularly permutating the mask $k_r^i$ by a selected number of bits d.

4. The circuit according to any one of the preceding claims, **characterised in that** the main masks $k^i$ are of length W and are made up of an integer number of sub-masks of length S, the secondary masks $k_r^i$ being generated by permutating said sub-masks.

5. The circuit according to claim 4, **characterised in that** the sub-masks of the secondary masks are selected using the expression:

$$k_{r+1}^I[x] = k_r^I[\mathrm{mod}(x - Q, W/S)]$$

wherein:

    r is the round number;
    i represents a randomly drawn 4-bit number;
    Q is an integer allowing the permutation rate between two consecutive secondary masks $k_r^i$ and $k_{r+1}^i$ to be controlled;
    S is the length of a sub-mask expressed in bits;
    W is the length of the main mask expressed in bits;
    mod() is a function that is defined such that mod(a,b) = a modulo b, with a and b being integers.

6. The circuit according to any one of the preceding claims, **characterised in that** the main encrypting mask $k^i$ is regularly modified by randomly selecting a mask $k^i$ from a set of main masks stored in the circuit.

7. The circuit according to claim 6, **characterised in that** the set of main masks stored in the circuit (303) is different from one circuit to another.

8. The circuit according to claim 7, **characterised in that** the set of main masks is obtained using an internal circuit mask-generating circuit.

9. The circuit according to any one of the preceding claims, **characterised in that** the Hamming distance between two masks $k_r^i$ and $k_{r+1}^i$ equals S/2.

10. The circuit according to any one of the preceding claims, **characterised in that** the Hamming weight of a mask $k^i$ equals W/2.

11. The circuit according to any one of the preceding claims, **characterised in that** the non-linear processing operations are implemented using S-boxes (213, 310).

12. The circuit according to any one of the preceding claims, **characterised in that** the non-linear processing operations are applied after the linear processing operations in a same combination block just prior to the sampling of the result in a register.

13. The circuit according to any one of the preceding claims, **characterised in that** it is implemented in an FPGA circuit.

14. The circuit according to claim 13, **characterised in that** the set of main masks is obtained using the modification of the configuration file of the FPGA circuit.

15. The circuit according to any one of claims 13 to 14, **characterised in that** it comprises dynamic reconfiguration means for updating the set of main masks and the tables implementing the parts of the circuit that correspond to the non-linear processing operations.

16. The circuit according to any one of claims 1 to 12, **characterised in that** it is implemented in an ASIC.

FIG.1

FIG.2

FIG.3

ETAGE
D'ENTREE

RONDE 1

RONDE 2

ETAGE
DE SORTIE

$\oplus \leftarrow k_0^i[3]$  $\oplus \leftarrow k_0^i[2]$  $\oplus \leftarrow k_0^i[1]$  $\oplus \leftarrow k_0^i[0]$

$L_{-1}^{-1}$  400

401  $L_{-1}$

$\oplus \leftarrow k_0^c[3]$  $\oplus \leftarrow k_0^c[2]$  $\oplus \leftarrow k_0^c[1]$  $\oplus \leftarrow k_0^c[0]$

$\oplus \leftarrow k_0^i[3]$  $\oplus \leftarrow k_0^i[2]$  $\oplus \leftarrow k_0^i[1]$  $\oplus \leftarrow k_0^i[0]$

S  S  S  S

$\oplus \leftarrow L_0^{-1}(k_1^i[3])$  $\oplus \leftarrow L_0^{-1}(k_1^i[2])$  $\oplus \leftarrow L_0^{-1}(k_1^i[1])$  $\oplus \leftarrow L_0^{-1}(k_1^i[0])$

402  $L_0$

$\oplus \leftarrow k_1^c[3]$  $\oplus \leftarrow k_1^c[2]$  $\oplus \leftarrow k_1^c[1]$  $\oplus \leftarrow k_1^c[0]$

$\oplus \leftarrow k_1^i[3]$  $\oplus \leftarrow k_1^i[2]$  $\oplus \leftarrow k_1^i[1]$  $\oplus \leftarrow k_1^i[0]$

S  S  S  S

$\oplus \leftarrow L_1^{-1}(k_2^i[3])$  $\oplus \leftarrow L_1^{-1}(k_2^i[2])$  $\oplus \leftarrow L_1^{-1}(k_2^i[1])$  $\oplus L_1^{-1}(k_2^i[0])$

403  $L_1$

$\oplus \leftarrow k_2^c[3]$  $\oplus \leftarrow k_2^c[2]$  $\oplus \leftarrow k_2^c[1]$  $\oplus \leftarrow k_2^c[0]$

$\oplus \leftarrow k_2^i[3]$  $\oplus \leftarrow k_2^i[2]$  $\oplus \leftarrow k_2^i[1]$  $\oplus \leftarrow k_2^i[0]$

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   EP 0981223 A2

**Littérature non-brevet citée dans la description**

*   Timing Attack on Implémentations of Diffie-Hellman, RSA, DSS and Other Systems. **P. C. KOCHER ; J. JAFFE ; B. JUN.** Proceedings of CRYPTO'96. Springer-Verlag, 1996, vol. 1109, 104-113
*   Differential Power Analysis. **P. C. KOCHER ; J. JAFFE ; B. JUN.** Proceedings of CRYPTO'99, volume 1666 LNCS. Springer-Verlag, 1999, vol. 1666, 388-397
*   Improved Higher Order Side-Channel Attacks with FPGA experiments. **E. PEETERS ; F. STANDAERT ; N. DONCKERS ; J-J. QUIS-QUATER.** Cryptographic Hardware and Embedded Systems - Proceedings of CHES, volume 3659 LNCS. Springer-Verlag, 2005, vol. 3659, 309-323
*   **HUNG-YU CHIEN.** Tree-Based matched RFID Yoking MAking It More Practical and Efficient. *I.J.Computer Network and Information Security,* Octobre 2009, vol. 1, 1-8